# EUROPEAN PATENT APPLICATION

(11) **EP 1 038 911 A1**
(43) Date of publication of application: **27.09.2000**
(21) Application number: 00302163.1
(22) Date of filing: 16.03.2000
(51) Int. Cl.: C08K 5/3435, C08K 5/098, C08L 23/10, C08L 53/00

(54) **Polyolefin resin composition, their moldings and molding process**

(30) Priority: 19.03.1999 JP 7665699
(71) Applicant: Grand Polymer Co., Ltd., Tokyo 104-0031 (JP); Honda Giken Kogyo Kabushiki Kaisha, Minato-ku, Tokyo 107-8556 (JP)
(72) Inventor: Toshino, Hiroyuki, c/o Grand Polymer Co., Ltd., Ichihara-shi, Chiba 299-0108 (JP); Takahashi, Nobuyuki, K.K. Honda Gijutsu Kenkyusho, Wako-shi, Saitama 351-0113 (JP); Ueno, Kouhei, c/o Grand Polymer Co., Ltd., Ichihara-shi, Chiba 299-0108 (JP); Aoki, Osamu, c/o K.K. Honda Gijutsu Kenkyusho, Wako-shi, Saitama 351-0113 (JP)
(74) Representative: Cresswell, Thomas Anthony

(57) **Abstract**

A polyolefin resin composition for injection molding which comprises polyolefin resin (A), light stabilizer (B) having at least one tertiary amino group, and fatty acid metal salt (C).

## Description

### Background of the Invention

### 1. Field of the Invention

The invention relates to a polyolefin resin composition for injection-molding having excellent weather resistance, moldings thereof and a process for producing those moldings.

### 2. Description of the Background

Various moldings are produced by injection-molding polyolefin resins such as polypropylene. The compounding of a hindered amine compound as a light stabilizer and a fatty acid metal salt such as calcium stearate as a halogen scavenger enables molding having excellent weather resistance to be obtained.

When a matted molding is produced by injection-molding such polyolefin resin composition into a mold whose inside surface has a grain pattern, white powdery matter sometimes are deposited on the inside surface of the mold for any unknown reason, filling up the dented areas in the section provided on the inside surface of the mold for the formation of the grain pattern. As a general means to prevent the dented areas from being filled up, molding operation is suspended periodically, and the mold is cleaned. Especially injection molding operation using a mold having the hot-runner system shows the tendency for a certain substance in the polyolefin resin composition being heated and melted to be sublimated through the hot runner to settle inside the mold, resulting in a larger amount of white powdery matter being deposited on the inside surface of the mold.

Upon making various studies of the cause of the formation of such white powdery matter, the inventors presume that the calcium stearate added as a halogen scavenger to the polyolefin resin - polypropylene, for example - reacts with the hydrochloric acid deriving from the residues of the catalyst used in the manufacture of the polypropylene to turn into stearic acid, which in turn reacts with the hindered amine compound added as a light stabilizer, thus forming such white powdery matter.

In the Japanese Laid-open Patent Publication No. 185659 / 1992, it is disclosed that compounding a particular hindered piperidine-based compound and metallic soap-based or higher fatty acid-based slip agent in a particular ratio to a polypropylene resin composition containing an α-olefin copolymer rubber and an inorganic filler makes possible the suppression of the bleeding properties of a certain component that tends to be formed in the molding of a bumper material made of polypropylene-based resin, for example, and the adequate stabilization of the molding against light. However, no mention is made of mold contamination occurring at the time of molding.

### Summary of the Invention

Accordingly it is an object of the invention to provide a polyolefin resin composition that will make possible the production of matted injection-moldings having excellent weather resistance which do not involve the deposition of the white powdery matter on the inside surface of the mold which has occurred with the conventional resin composition, when they are injection-molded by use of an injection-molding mold whose inside surface has a grain pattern, particularly a mold having the hot-runner system.

Another object of the invention is to provide matted injection-moldings that may be obtained from such the polyolefin resin composition and a process for producing such injection-moldings.

Other and further objects, features and advantages of the invention will appear more fully from the following description.

The present invention relates to a polyolefin highly-weather-resistant resin composition for injection-molding which comprises a polyolefin resin (A), a light stabilizer (B) having tertiary amino group, and a fatty acid metal salt (C). As the light stabilizer (B) having tertiary amino group, the hindered amine-based light stabilizer (B) all hydrogen atoms of amino group of which have been substituted by alkyl groups or acetyl groups is preferable, and a compound having piperidine ring is more preferable, and especially bis( N-methyl-2,2,6,6-tetramethyl-4-piperidinyl )sebacate is more preferable.

Furthermore, the invention also relates to polyolefin resin injection moldings formed from a polyolefin resin composition which comprises a polyolefin resin (A), a light stabilizer (B) having tertiary amino group, and a fatty acid metal salt (C), which has a surface gloss value (60°) of 1 to 3.5. As examples of such moldings, products having the surfaces matted with a grain pattern may be cited.

Moreover, the invention relates to a process for producing polyolefin resin injection moldings by melting a resin composition which comprises a polyolefin resin (A), a light stabilizer (B) having tertiary amino group, and a fatty acid metal salt (C), and injecting the resin composition into a mold having a grain pattern on its inside surface. The manufacturing process will make stable continuous production operation possible. Especially when the injection molding process employs a hot-runner system is used, it will be possible to prevent the occurrence of such white powdery matter as mentioned above.

### Detailed Description of the Preferred Embodiments

Next, the following is a specific explanation of the injection-molding polyolefin resin composition , moldings thereof and the process for producing those moldings of the invention.

### Polyolefin Resin Composition

The injection-molding polyolefin resin composition of the invention comprises at least the polyolefin resin (A), the light stabilizer (B) having tertiary amino group, and the fatty acid metal salt (C).

For the polyolefin resin (A) used in the invention, any polyolefins of the injection-molding grade that are generally sold may be used without any particular restriction.

Specific examples of such polyolefin resin (A) include polyethylene resins such as low density polyethylene, linear low density polyethylene, medium density polyethylene and high density polyethylene, propylene homopolymer, random or block copolymer of propylene and α-olefin such as ethylene, 1-butene, 4-methyl-1-pentene, 1-hexene, 1-octene and 1-decene, polybutene, poly-4-methyl-1-pentene and mixtures thereof.

Out of them, as the polyolefin resin (A), propylene polymers are preferable, and those propylene polymers showing the melt flow rate of 1 to 500 (g/10 minutes) as measured at 230°C under a load of 2.16 kg based on ASTM D-1238 are suitable for injection-molding use.

For the compound (B) as a light stabilizer, any compounds that have in their molecules tertiary amino group may be used, especially hindered amine-based compound having the amino group which is of the hindered structure is preferred. Considering the reactivity of such amine-based compound, it is more preferable that all hydrogen atoms of the amino group have been substituted by the alkyl groups or acetyl groups. As the alkyl group, the hydrocarbon group which has a straight chain or branch having 1 to 20 carbon atoms is preferable, and examples of such alkyl group include the methyl, ethyl, propyl, butyl, octyl and nonyl groups.

As examples of compounds having a preferable amino group, compounds of the aliphatic, aromatic and alicyclic groups having the piperidine ring in their molecules may be cited. In those compounds, one hydrogen atom bonded to a nitrogen atom of the piperidine ring has been substituted by the alkyl group or acetyl group, and the four hydrogen atoms bonded to the carbon atoms located at both sides of the aforesaid nitrogen atom have been substituted by the alkyl groups so that they have become of the steric hindrance structure.

Specific examples of the hindered amine-based light stabilizer (B) include those compounds having the chemical structures as shown in the following formulas (1) through (9):

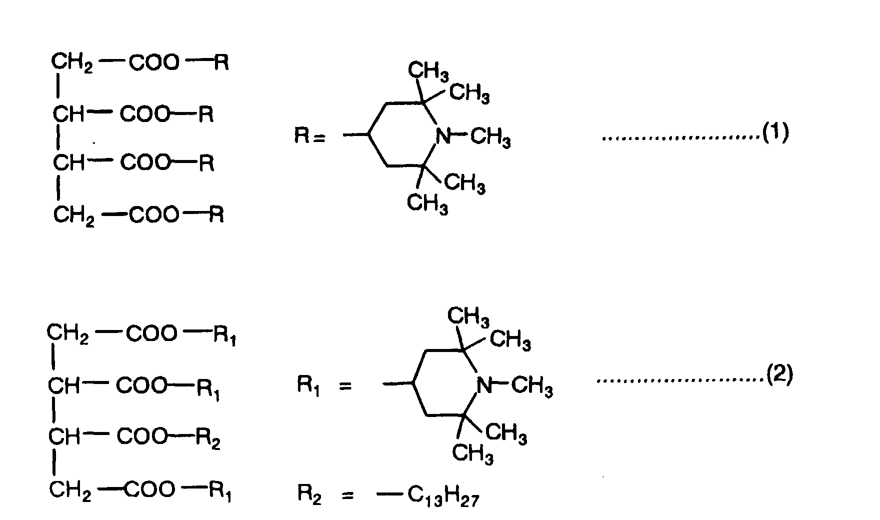

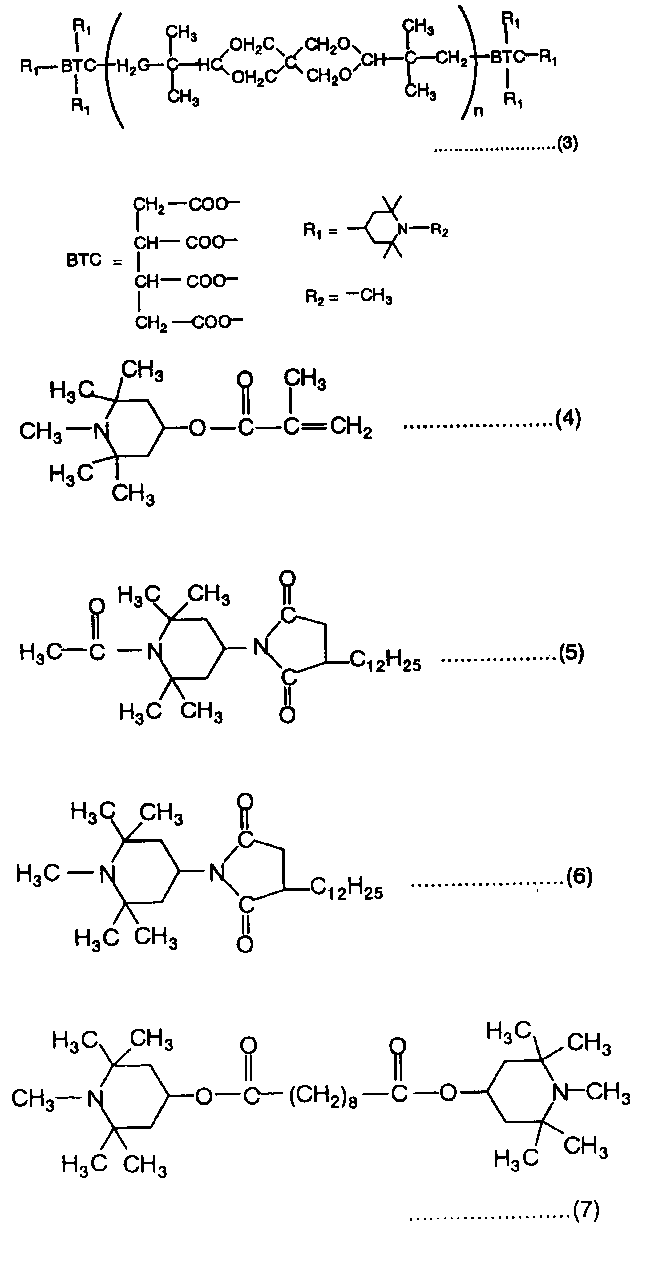

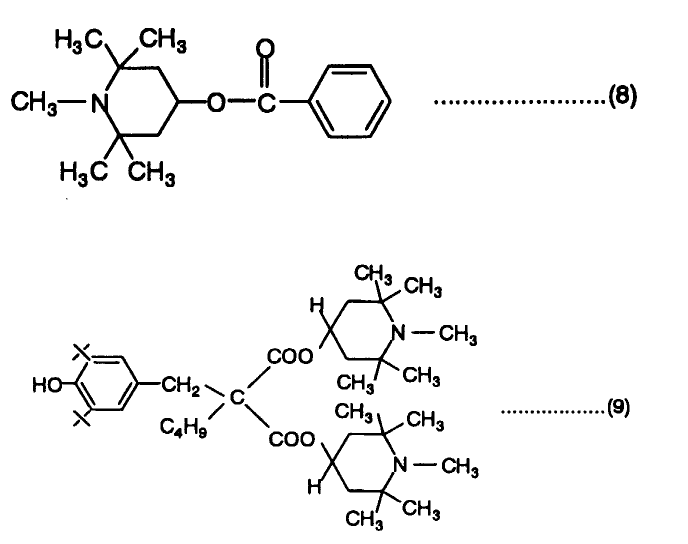

The aforesaid compounds are commercially available under the following trade names, and therefore appropriate ones can be selected for use from among them:
Compound of formula (1): Adekastab LA-52 (available from Asahi Denka Kogyo K.K.)
Compound of formula (2): Adekastab LA-62 (available from Asahi Denka Kogyo K.K.)
Compound of formula (3): Adekastab LA-63P (available from Asahi Denka Kogyo K.K.)
Compound of formula (4): Adekastab LA-82 (available from Asahi Denka Kogyo K.K.)
Compound of formula (5): Sanduvor 3058 (available from Sand Co., Ltd.)
Compound of formula (6): Sanduvor 3056 (available from Sand Co., Ltd.)
Compound of formula (7): Tinuvin 765 (available from Ciba Geigy)
Compound of formula (8): Adekastab LA-82 (available from Asahi Denka Kogyo K.K.)
Compound of formula (9): Tinuvin 144 (available from Ciba Geigy)

Out of these compounds, bis( N-methyl-2,2,6,6-tetramethyl-4-piperidinyl ) sebacate as shown in formula (7) is preferable. The light stabilizer having tertiary amino group may be used singly or in combination with two or more of them.

The light stabilizer (B) is compounded in the ratio of 0.05 to 1 part by weight, preferably 0.10 to 0.5 parts by weight, more preferably 0.10 to 0.3 parts by weight to 100 parts of the polyolefin resin (A). If the light stabilizer is used within the above range, a polyolefin resin composition that makes the production of injection moldings having excellent weather resistance possible may be obtained.

For the fatty acid metal salt (C) used in the invention, the compounds that are usually compounded to polyolefin resin are used without any particular restriction. Examples of such compounds include calcium salt, magnesium slat, zinc salt, etc. of higher fatty acids such as lauric acid CH₃(CH₂)₁₀COOH, myristic acid CH₃(CH₂)₁₂COOH, palmitic acid CH₃(CH₂)₁₄COOH and stearic acid CH₃(CH₂)₁₆COOH.

The fatty acid metal salt (C) is compounded in the ratio of 0.01 to 1 part by weight, preferably 0.02 to 0.5 parts by weight, more preferably 0.05 to 0.3 parts by weight to 100 parts of the polyolefin resin (A). When the fatty acid metal salt (C) is added within the above range, it acts as a hydrochloric acid absorber and as a dispersant satisfactorily for the filler and the pigment.

In the polyolefin resin composition of the invention, the compounding of a combination of the light stabilizer (B) having tertiary amino group and the fatty acid metal salt (C) will make it possible to prevent white powdery matter from being deposited on the inside surface of the mold at the time of injection molding. Other additives such as weathering stabilizers, ultraviolet absorbers, antioxidants, antistatic agents, nucleators, lubricants, pigments, organic peroxides, plasticizers and copper damage prevention agents may be added as appropriate to such extent that any of the objects of the invention is not frustrated.

The injection-molding polyolefin resin composition of the invention may be offered for use in injection molding satisfactorily, after it is pelletized by mixing the aforesaid components uniformly with it by use of a mixer such as a Henschel mixer or a tumbling mixer, and then melting and kneading the mixture by means of a single-screw or twin-screw extruder. This resin composition may be used for the production of glossy moldings as well as matted moldings as described below.

### Polyolefin Resin Injection-Moldings

The polyolefin resin injection-moldings of the invention are injection-moldings produced in any form by the injection-molding method which comprise at least the polyolefin resin (A), the light stabilizer (B) having tertiary amino group, and the fatty acid metal salt (C).

These resin injection-moldings show a degree of surface gloss as expressed in the 60° gloss value ranging from 1 to 3.5 as measured based on ASTM D-523. These moldings become products having a matted appearance when they are given a grain pattern to their surfaces in the molding process.

### Process for Producing Polyolefin Resin Injection-Moldings

These polyolefin resin injection-moldings of the invention may be produced by melting the aforesaid polyolefin resin composition in an extruder and then injecting it into a mold having a grain pattern on its inside surface. This manufacturing process will make it possible to prevent any trouble caused by so-called mold contamination which has tended to occur under the conventional process as the substance deriving from the raw material resin composition turns into white powdery matter in the course of repeated operations of injection molding, resulting in deposits on the inside surface of the mold.

In the case of using an injection-molding machine employing what is called the hot-runner system in which a hot-runner mold is equipped before a cooled product mold, the mold has to be cleaned by temporarily stopping the production operation under the conventional process because the substance formed through the heated mold is deposited on the inside surface of the mold as white powdery matter, which sometimes fills up the dented areas of the grain pattern when the deposition progresses. However, according to the manufacturing process of the invention, many hours of continuous production operation may become possible even if the high-productivity hot-runner system is employed. Conditions of such injection molding may be the resin temperature of 210°C, hot-runner temperature of 190°C and mold temperature of 40°C, for example.

### Examples

The invention will be understood more easily with reference to the following examples; however these examples are intended to illustrate the invention and are not to be construed to limit the scope of the invention.

### Example 1:

The specified amount of the following components were mixed by use of a Henschel mixer, supplied to a twin-screw extruder having a diameter of 45 mm to be kneaded, and pelletized:

| | | |
|---|---|---|
| (a) | Crystalline propylene-ethylene block copolymer having an ethylene content of 10 wt% | 100 parts by weight |
| (b) | Talc | 11 parts by weight |
| (c) | Bis(N-methyl-2,2,6,6-tetramethyl-4-piperidinyl) sebacate ( trade name: Tinuvin 765 available from Ciba-Geigy) as the hindered amine-based light stabilizer | 0.22 parts by weight |
| (d) | Calcium stearate | 0.11 parts by weight |
| (e) | Carbon black | 1.11 parts by weight |
| (f) | 2,6-di-t-butyl-4-methylphenol as the phenolic antioxidant A | 0.056 parts by weight |
| (g) | Tetrakis[methylene-3-(3,5-di-t-butyl-4-hydroxyphenyl)propionate]methane as the phenolic antioxidant B | 0.11 parts by weight |

The lid of a glove compartment was molded (first injection-molded product) under the hot-runner system at the resin temperature of 210°C and the hot runner temperature of 190°C as the injection-molding conditions, using pellets of the above polyolefin resin composition. Further, the injection-molding mold had been machined for a grain pattern 60 µm in depth and had been subjected to sandblasting treatment using 80-mesh sand. The gloss of the surface of the lid of the glove compartment thus obtained was measured and evaluated in terms of 60° gloss value in accordance with ASTM D-523.

Subsequently, the injection molding operation was repeated 8,000 times without cleaning the inside of the mold. The 60° gloss value was measured similarly of the lids obtained by the 500th, 1,000th, 2500th, 3,000th, 4,000th, 6,000th and 8,000th times of injection molding. The results of the measurement were shown in Table 1.

### Comparative Example 1:

The lid of the glove compartment was molded by the same procedures as described in Example 1 except that 0.22 parts by weight of bis(2,2,6,6-tetramethyl-4-piperidinyl)sebacate ( trade name: Sanol LS-770 available from Sankyo Co.) were used for the hindered amine-based light stabilizer.

The 60° gloss value of the lid obtained after carrying out 1,500 times of injection molding was 3.6. Since it was undesirable if the 60° gloss value exceeded this value, the subsequent injection molding operation was discontinued. The results of the measurement of the gloss value were shown in Table 1.

**Table 1**

| No. of Injection Molding Operation | Gloss of Molded Product Surface (60° Gloss Value) | |
|---|---|---|
| | Example 1 | Comparative Example 1 |
| 1st time | 2.6 | 2.6 |
| 500th time | 2.6 | 3.1 |
| 1,000th time | 2.6 | 3.3 |
| 1,500th time | 2.6 | 3.6 |
| 2,500th time | 2.6 | Molding discontinued |
| 3,000th time | 2.6 | Molding discontinued |
| 4,000th time | 2.6 | Molding discontinued |
| 6,000th time | 2.6 | Molding discontinued |
| 8,000th time | 2.6 | Molding discontinued |

### Effect of the Invention

The polyolefin resin composition for injection-molding of the invention provides injection moldings having excellent weather resistance at high productivity. Furthermore, the injection moldings of the invention are products which has a uniformly matted surface and will show a good appearance since no white powdery matter is deposited on its surface after molding.

Further, according to the process for producing the injection moldings of the invention, in which the aforesaid resin composition is offered for injection molding operation using a mold having a grain pattern on its inside surface, it will be possible to prevent any trouble due to the contamination of the mold which is caused as the substance deriving from the raw material resin composition turns into white powdery matter under the conventional process, resulting in deposits on the inside surface of the mold. Especially even if the hot-runner system which imposes severe conditions on the resin composition is employed, the manufacturing process of the invention will make it possible to prevent such mold contamination. Consequently, it may become possible to eliminate the period mold cleaning operation that has been conducted under the conventional process and continue stable continuous production operation.

Since the resin composition of the invention provides moldings having excellent physical properties and enable the high-productivity production of such moldings as described above, they may be utilized in the manufacture of automotive trim parts, automotive exterior parts, electric appliances, industrial parts and various industrial materials such as packaging materials. Especially since the moldings of the invention retain excellent weather resistance for a long time and the manufacturing process therefor is suitable for the continuous production of matted products, this resin composition is used suitably for the manufacture of those automotive trim parts which require weather resistance and a sober matted appearance. Examples of such automotive trim parts include instrument panels, trims, console boxes and glove compartment outer parts.

It is further understood by those skilled in the art that the foregoing description is preferred embodiments of the disclosed polyolefin resin composition, their moldings and their molding process, and that various changes and modification may be made in the invention without departing from the spirit and scope thereof.

## Claims

1. A polyolefin resin composition for injection molding which comprises polyolefin resin (A), light stabilizer (B) having at least one tertiary amino group, and fatty acid metal salt (C).

2. A composition according to claim 1, wherein the substituents on the tertiary amino group of the light stabilizer (B) are the same or different, and each is alkyl or acetyl.

3. A composition according to claim 1 or claim 2, wherein the light stabilizer (B) is a compound comprising one or more piperidine rings.

4. A composition according to any one of claims 1 to 3, wherein the light stabilizer (B) is bis(N-methyl-2,2,6,6-tetramethyl-4-piperidinyl)sebacate.

5. A composition according to any one of claims 1 to 4, wherein the composition comprises 100 parts by weight of the polyolefin resin (A), 0.05 to 1 part by weight of light stabilizer (B), and 0.02 to 5 parts by weight of fatty acid metal salt (C).

6. A composition according to any of claims 1 to 5, wherein the polyolefin resin (A) is polypropylene.

7. A polyolefin resin injection molding formed from a polyolefin resin composition according to any one of claims 1 to 6, which molding has a surface gloss value (60°) of from 1 to 3.5.

8. A molding according to claim 7, which has a matted appearance and a grain pattern on the surface.

9. A process for producing polyolefin resin injection moldings, which process comprises melting a composition according to any one of claims 1 to 6 and injecting it into a mold with a grain pattern article inside surface.

10. A process according to claim 9, wherein the mold has a hot-runner system.

11. Use of a polyolefin resin composition according to any one of claims 1 to 6 or of an injection molding according to claim 7 or claim 8 in the manufacture of automotive trim parts, automotive exterior parts, electrical appliances, industrial parts or industrial materials.
